# EUROPÄISCHE PATENTANMELDUNG

(11) **EP 0 699 879 A2**
(43) Veröffentlichungstag der Anmeldung: **06.03.1996**
(21) Anmeldenummer: 95113671.2
(22) Anmeldetag: 31.08.1995
(51) Int. Cl.: F24J 2/05, F24J 2/28

(54) **Thermischer Solarkollektor**

(30) Priorität: 01.09.1994 DE 4431124
(71) Anmelder: INSTITUT FÜR LUFT- UND KÄLTETECHNIK GEMEINNÜTZIGE GESELLSCHAFT mbH, D-01309 Dresden (DE)
(72) Erfinder: Schwärzler, Christoph, Dipl.-Ing., D-82024 Taufkirchen (DE); Rudischer, Rainer, Dipl-Ing., D-01069 Dresden (DE)
(74) Vertreter: Seefeld, Gerd

(57) **Zusammenfassung**

Die Erfindung betrifft thermische Solarkollektoren mit volumetrischem Absorber zur energetisch und exergetisch effizienten Erwärmung eines Wärmeübertragers.

Aufgabe der Erfindung ist es, eine kostengünstige und energieeffiziente Umsetzung von großflächigen Kollektormodulen zu ermöglichen.

Erfindungsgemäß besteht der thermische Solarkollektor aus einer Anordnung durchströmter transparenter Glasrohre 1.8, die mittels geeignet geformter Reflektoren 1.7 allseitig beschienen werden. Die Strahlungsenergie wird mittels der Absorber 1.1 über das Rohrvolumen verteilt absorbiert.

## Beschreibung

Die Erfindung beinhaltet eine Anordnung für thermische Solarkollektoren mit volumetrischem Absorber zur energetisch und exergetisch effizienten Erwärmung eines Wärmeträgers. Der Einsatz von volumetrischen Absorbern in thermischen Solarkollektoren ist noch wenig bekannt. Gegenüber den üblicherweise eingesetzten Flachabsorbern mit wärmeträgerdurchströmtem Kanalsystem weisen volumetrische Absorber Vorteile bei der Energieumwandlung und Wärmeübertragung auf.

In volumetrischen Absorbem erfolgt die Strahlungsabsorption verteilt über das gesamte Absorbervolumen und die Wärmeübertragung über eine große Oberfläche in direktem Kontakt an den Wärmeträger. Dieses Prinzip ist bereits seit langem bekannt. Bislang kommen volumetrische Absorber fast ausschließlich in solarthermischen Turmkraftwerken zum Einsatz, wo gebündelte Solarstrahlung auf einen volumetrischen Rohrschlangenabsorber gelenkt wird.

Ein geeigneter Aufbau des volumetrischen Absorbers reduziert exergetische Verluste bei der Umwandlung von Strahlungsenergie in Wärme. In DE 4243967 wird vorgeschlagen, die Strahlungsexergie durch einen in Einstrahlungsrichtung gezielt veränderten Transmissionsgrad des Absorbers effektiver zu nutzen. Innerhalb des geschichteten Absorbers werden in höheren Schichten vorzugsweise langwellige Spektralbereiche, in tieferen Schichten kurzwellige Spektralbereiche absorbiert, so daß die Exergie der Solarstrahlung weitgehend erhalten bleibt. Der Wärmeträger strömt in einem flächigen Spalt zwischen einer transparenten Abdeckscheibe und der Absorberoberseite ein, durchströmt den Absorber in Einstrahlungsrichtung und wird anschließend aus dem flächigen Spalt zwischen Absorberunterseite und Boden abgeführt. Dieses Prinzip eignet sich sowohl für flüssige als auch für gasförmige Wärmeträger.

Bei flüssigen Wärmeträgem treten aufgrund der hydrostatischen Drücke in schräg aufgestellten Kollektoren mit gebräuchlichen Dimensionen von 2 m² bis 7 m² hohe Belastungen auf die Abdeckscheibe, den Boden und die Dichtung auf. Zusätzliche Belastungen dieser Bauteile entstehen durch Systemdrücke bis 3 hPa. Bei thermodynamisch, strahlungsoptisch und wirtschaftlich sinnvoller Dimensionierung dieser Bauteilwerkstoffe können die erforderlichen Festigkeitswerte nicht erreicht werden. Geeignete konstruktive Lösungen für dieses Problem sind bislang nicht bekannt, so daß volumetrische Solarkollektoren nur für kleine Flächen realisierbar sind.

Bei Vorlauftemperaturen, die über der Umgebungstemperatur liegen, treten bei der Kollektoranordnung nach DE 4243967 trotz des günstigen, in Einstrahlungsrichtung steigenden Temperaturverlaufes Wärmeverluste über die transparente Abdeckscheibe auf. Da der Wärmeträger in direktem Kontakt mit der Abdeckscheibe steht, sind diese Verluste höher als bei verglasten Kollektoren mit wärmedämmendem Luftpolster zwischen Absorber und Abdeckscheibe.

Die konstruktive und technologische Umsetzung der Absorberanordnung nach DE 4243967 ist relativ hohem Fertigungs- und Kostenaufwand verbunden, so daß thermodynamische und strahlungsoptische Vorteile durch der hohen Kostenaufwand kompensiert werden und kein nennenswerter Kostenvorteil gegenüber herkömmlichen Kollektoren entsteht.

Der Erfindung liegt die Aufgabe zugrunde, eine Anordnung eines volumetrischen Absorbers zu schaffen, die eine kostengünstige und energieeffiziente Umsetzung von großflächigen Kollektormodulen (>2 m²) ermöglicht. Auf eine Durchströmung des Absorbers in Einstrahlungsrichtung wird verzichtet, um eine konstruktive Lösung eines druckstabilen und kostengünstigen Kollektors mit geringem technologischen Aufwand ermöglichen zu können. Die Vorteile der direkten und effizienten Wärmeübertragung von Absorber an den Wärmeträger mittels volumetrischem Absorber bleiben in vollem Umfang erhalten. Die Druckbeständigkeit muß bis zu einem Maximaldruck von 2 bis 3 hPa gewährleistet sein, der in den Kreisläufen handelsüblicher Solarsyteme auftritt, damit keine kostenerhöhenden Anpassungen bei Einsatz des neuartigen Kollektors notwendig sind.

Diese Aufgabe wird erfindungsgemäß durch die Merkmale der patentrechtlichen Ansprüche gelöst.

Die Verwendung eines volumetrischen Absorbers mit direktem Wärmeübergang an den Wärmeträger bedeutet eine Verbesserung der Wärmeübertragungseigenschaften des Absorbers und somit eine Erhöhung des flächenbezogenen Wirkungsgrades.

Mit dem gewählten Aufbau der Absorberrohre und deren Anordnung ist ein relativ geringer Fertigungsaufwand mit wenigen Arbeitsschitten gegeben, der sich kostensenkend auf die Kollektorherstellung auswirkt. Mit ähnlich geringem Aufwand kann durch Anschmelzen der Absorberrohre an Verteiler- und Sammlerrohr die Fügeverbindung der Rohre erfolgen.

Bei entsprechender Auslegung der Geometrie der Glasrohre ist ein druckbeständiger Absorber sinnvoll realisierbar im Hinblick auf sparsamen Materialeinsatz und Gewichtseinsparung. Bei einem Rohrdurchmesser von beispielsweise 30 mm und einer Wandstärke von 2 mm ist eine ausreichende Druckbeständigkeit von 3 bis 4 hPa gegeben.

Zur thermischen Isolierung können nach Bild 1 die Absorberanordung aus einwandigen Glasrohren (1.8) und der Strahlungsreflektor (1.7) in ein Kollektorgehäuse (1.11) mit opaker Wärmedämmung (1.6) und transparenter Abdeckscheibe (1.4) eingebaut werden. Bild 2 und Bild 3 zeigen eine andere Art der effizienten thermischen Isolierung mittels doppelwandigem Glasrohr (2.1), dessen Zwischenraum (2.2) evakuiert ist. Diese Technologie ist für den Kollektorbau bekannt und kann in modifizierter Art auf den volumetrischen Röhrenabsorber angewendet werden. Auf ein gedichtetes und wärmegedämmtes Kollektorgehäuse kann verzichtet werden.

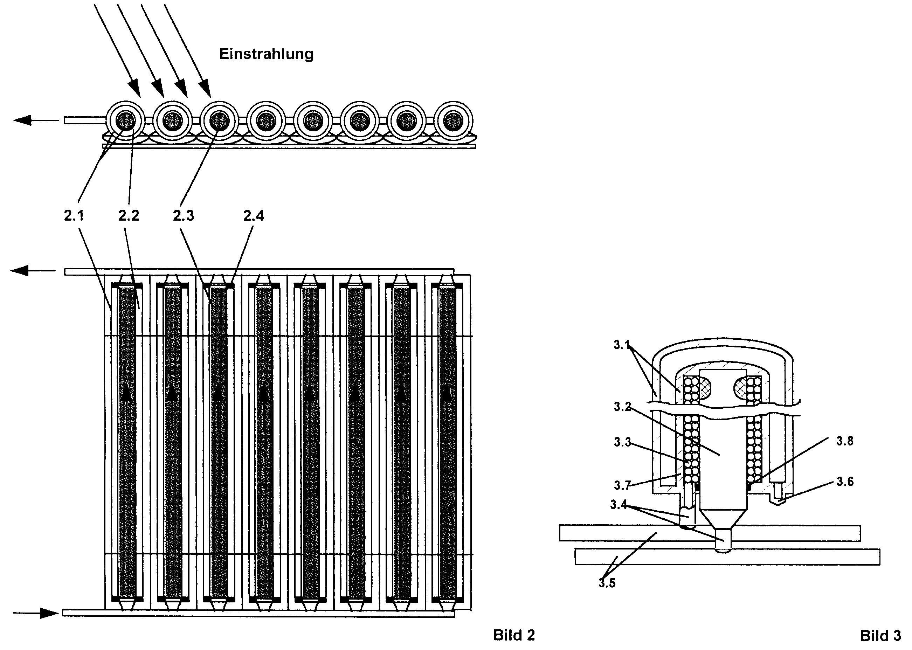

Durchströmt der Wärmeträger nach Bild 2 das Absorberrohr (2.3) nur in einer Richtung, so sind zur Kompensation unterschiedlicher Wärmedehnungen von Außen- und Innenrohr die Vakuumverschlüsse (2.4) elastisch zu gestalten.

Nach Bild 3 ist das Doppelrohr (3.1) an einem Ende verschlossen, so daß unterschiedliche Wärmedehnungen von Außen- und Innenrohr möglich sind. In dem Innenrohr befindet sich ein Strömungskanal (3.2) aus einem dünnwandigen Metallrohr durch das der Wärmeträger an das Ende des Absorberrohres (3.7) strömt. Der Strömungskanal (3.2) ist mit einem O-Ring (3.8) gegenüber dem Doppelrohr (3.1) abgedichtet. Im ringförmigen Spalt (3.3) zwischen Strömungskanal (3.2) und Absorberrohres (3.7), der mit volumetrischem Absorber vollständig gefüllt ist, strömt der Wärmeträger zurück. Zulauf- und Rücklaufstutzen (3.4) liegen an einem Ende des Doppelrohres (3.1) und sind an Verteiler und Sammler (3.5) angeschlossen. An diesem Ende befindet sich auch der Vakuumstutzen (3.6).

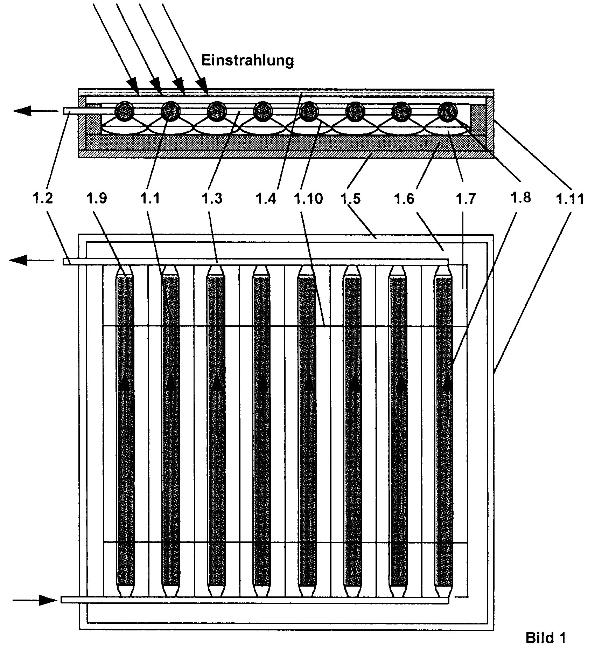

Nach Bild 1 strömt der Wärmeträger über den Einlaufstutzen (1.2) in das Verteilerrohr (1.3) und von dort in die einzelnen Absorberrohre (1.8). Durch die transparente Abdeckscheibe (1.4) trifft ein Teil der solaren Einstrahlung direkt auf die Absorberrohre (1.8) und ein Teil auf den Reflektor (1.7), der die Strahlen auf die Absorberrohre (1.8) umlenkt. Der in den Rohren (1.8) befindliche, für den Wärmeträger durchlässige Absorber (1.1) absorbiert die solare Einstrahlung und erwärmt sich. Über die große Oberfläche des Absorbers (1.1), die mit dem Wärmeträger benetzt ist, geht die Wärme durch direkten Wärmeübergang an den Wärmeträger über. Beim Durchströmen der Absorberrohre (1.8) erwärmt sich der Wärmeträger und wird über den Sammler (1.3) und den Rücklaufstutzen (1.2) aus dem Kollektor abgeführt.

## Patentansprüche

1. Thermischer Solarkollektor, zur effizienten Erwärmung flüssiger oder gasförmiger Wärmeträger durch Absorption von Sonnenstrahlung dadurch gekennzeichnet, daß eine Anordnung durchströmter transparenter Glasrohre (1.8), die mit einem porösen Absorber (1.1) vollständig gefüllt und durch Stützen (1.10) gelagert sind, mittels geeignet geformtem Reflektor (1.7) allseitig beschienen wird und die Strahlungsenergie über das Rohrvolumen verteilt absorbiert.

2. Thermischer Solarkollektor nach Anspruch 1, dadurch gekennzeichnet, daß der Absorber (1.1) zur thermischen Isolierung in ein Kollektorgehäuse mit opaker Wärmedämmung und transparenter Abdeckung eingebaut ist.

3. Thermischer Solarkollektor nach Anspruch 1, dadurch gekennzeichnet, daß das Absorberrohr zur thermischen Isolierung aus einem doppelwandigen Glasrohr aufgebaut ist, dessen Zwischenraum evakuiert ist.

4. Thermischer Solarkollektor nach Anspruch 1 und Anspruch 3, dadurch gekennzeichnet, daß das doppelwandige evakuierte Absorberrohr an einem Ende geschlossen ist und ein rohrförmiges Gefäß bildet, in dem sich ein Strömungskanal und der volumetrische Absorber befinden. Der Wärmeträger strömt durch den Strömungskanal an das Ende des Innenrohres und im absorbergefüllten Ringspalt zwischen Strömungskanal und Rohrinnenwand zurück.

5. Thermischer Solarkollektor nach Anspruch 1, Anspruch 2 und Anspruch 3, dadurch gekennzeichnet, daß die Absorberrohre (1.8) über einen Verteiler und Sammler (1.3) aus dem gleichen Werkstoff durch Verschmelzen parallel oder in Reihe verbunden sind.

6. Thermischer Solarkollektor nach Anspruch 1, dadurch gekennzeichnet, daß der Absorber (1.1) aus UV-beständigem und temperaturbesändigem silikatischem Werkstoff besteht, der die Strahlungsenergie über das Volumen verteilt absorbiert. Der Absorberwerkstoff kann auch als Schüttgut vorliegen.

7. Thermischer Solarkollektor nach Anspruch 1 und Anspruch 3, dadurch gekennzeichnet, daß innerhalb der Absorberrohre (1.8) an den Enden temperaturbeständige Siebe (1.9) mit geringem Druckverlust abgebracht sind, die das Austreten des Absorbers (1.1) verhindern, jedoch für den Wärmeträger durchlässig sind.

8. Thermischer Solarkollektor nach Anspruch 1, dadurch gekennzeichnet, daß mit der gewählten Anordnung, Lagerung (1.10) und Verschaltung der Absorberrohre auftretende Wärmedehnungen berücksichtigt sind.

9. Thermischer Solarkollektor nach Anspruch 1 und Anspruch 3, dadurch gekennzeichnet, daß Innen- und Außenrohr an ihren Enden jeweils mit einer temperaturbeständigen, elastischen Vakuumdichtung verschlossen sind, um unterschiedliche Wärmedehnungen zu kompensieren.
